# EUROPEAN PATENT APPLICATION

(11) **EP 4 342 577 A1**
(43) Date of publication of application: **27.03.2024**
(21) Application number: 22804297.4
(22) Date of filing: 01.03.2022
(51) Int. Cl.: B01F 31/80, H04R 1/44, G01N 35/00, G01N 35/02, G01N 1/38

(54) **AUTOMATIC CHEMICAL ANALYZER, AUTOMATIC CHEMICAL ANALYZER MAINTENANCE KIT, AND AUTOMATIC CHEMICAL ANALYZER MAINTENANCE METHOD**

(30) Priority: 18.05.2021 JP 2021083648
(71) Applicant: HITACHI HIGH-TECH CORPORATION, Tokyo 105-6409 (JP)
(72) Inventor: KATO Hajime, Tokyo 100-8280 (JP); SUZUKI Yoichiro, Tokyo 105-6409 (JP); KAWAHARA Tetsuji, Tokyo 105-6409 (JP); YOSHIDA Gorou, Tokyo 105-6409 (JP); YABUTANI Hisashi, Tokyo 105-6409 (JP)
(74) Representative: Mewburn Ellis LLP
(86) International application number: PCT/JP2022/008627
(87) International publication number: WO 2022/244376

(57) **Abstract**

There are provided an automatic chemical analyzer, an automatic chemical analyzer maintenance kit, and an automatic chemical analyzer maintenance method capable of, even in a case where a problem of the automatic chemical analyzer occurs, clarifying a cause of the problem in a user site and coping with the problem without collecting a device or a component. An automatic chemical analyzer maintenance kit 2 is connectable to an automatic chemical analyzer 1 including a reaction vessel 107 capable of accommodating at least a pipetted specimen and a reagent, and a stirring mechanism 109 including a piezoelectric element 201 that irradiates the reaction vessel 107 with an ultrasonic wave. The piezoelectric element 201 includes a plurality of divided electrodes 210. The automatic chemical analyzer maintenance kit 2 measures, for each of the divided electrodes 201, an absolute value of an impedance of the piezoelectric element 201 and a phase difference between a voltage applied to the divided electrode 201 and a current, and determines whether or not there is an abnormality of each divided electrode 201 based on a measurement result.

## Description

### Technical Field

The present invention relates to an automatic chemical analyzer, and particularly relates to an automatic chemical analyzer, an automatic chemical analyzer maintenance kit, and an automatic chemical analyzer maintenance method for normally realizing maintenance of a stirring mechanism for properly executing a stirring function in the automatic chemical analyzer including the stirring mechanism that mixes a liquid mixture of a specimen and a reagent in a reaction vessel in a non-contact manner by ultrasonic waves.

### Background Art

According to the techniques disclosed in PTL 1, PTL 2, PTL 3, and NPL 1, a technique of mixing a stirring target liquid (a specimen and a reagent) in a reaction vessel in a non-contact manner by using an effect of acoustic radiation pressure of ultrasonic waves has been developed, implemented on an automatic chemical analyzer, and put to practical use.

In the present technique, a sine wave, a rectangular wave, or the like is applied to a piezoelectric element at a frequency in the vicinity of a thickness resonance frequency of the piezoelectric element to generate an ultrasonic wave, and the stirring target liquid is mixed by irradiating the stirring target liquid with the ultrasonic waves from the outside of the reaction vessel. An automatic chemical analyzer equipped with the present ultrasonic non-contact stirring technique (referred to as the present stirring technique below) is assumed to be used for several years after introduction to a user site. Thus, similarly to other mechanisms (for example, a pipetting mechanism, a washing mechanism, and the like) constituting the automatic chemical analyzer, a function of checking whether each stirring operation is properly performed during an operation of the automatic chemical analyzer is required.

According to the technique disclosed in PTL 4, during a stirring operation, a current flowing through a piezoelectric element is normally measured and recorded for each stirring operation, and whether or not proper stirring has been performed is determined by measuring whether a prescribed current flows. In a case where the prescribed current value has not flowed, it is assumed that a desired ultrasonic wave has not been generated from the piezoelectric element that is a source of an ultrasonic wave, and an abnormality, an error, or an alert for the stirring operation is output to the automatic chemical analyzer to be presented to a user.

### Citation List

### Patent Literature

PTL 1: JP 3641992 B
PTL 2: JP 3661076 B
PTL 3: JP 4406629 B
PTL 4: JP 3746239 B
PTL 5: JP 4112228 B

### Non-Patent Literature

NPL 1: Chemical Engineering Science 60 (2005) pp. 5519-5528

### Summary of Invention

### Technical Problem

In the technique disclosed in PTL 4 described above, the stirring operation is performed once, and whether or not there is an abnormality is determined by collating a current waveform flowing through the piezoelectric element at this time and a prescribed waveform and value set in advance based on the value thereof.

However, it is difficult to probe which component constituting a stirring mechanism of an automatic chemical analyzer has a problem only by the above-described method. Not only the piezoelectric element but also a power amplifying device that drives the piezoelectric element, a relay circuit that selects an electrode to which a voltage is applied, and the like must be replaced to cope with the problem, in some cases. In addition, when the component that has been replaced and collected as a defective component is examined, there are cases where a problem does not necessarily occur in the piezoelectric element or a drive circuit system.

Therefore, the present invention provides an automatic chemical analyzer, an automatic chemical analyzer maintenance kit, and an automatic chemical analyzer maintenance method capable of, even in a case where a problem of the automatic chemical analyzer occurs, clarifying a cause of the problem in a user site and coping with the problem without collecting a device or a component.

### Solution to Problem

In order to solve the above problems, according to the present invention, an automatic chemical analyzer includes a reaction vessel capable of accommodating at least a pipetted specimen and a reagent, and a stirring mechanism including a piezoelectric element that irradiates the reaction vessel with an ultrasonic wave. The piezoelectric element includes a plurality of divided electrodes. The automatic chemical analyzer further includes an interface unit connectable to a maintenance kit that measures, for each of divided electrodes, an absolute value of an impedance of the piezoelectric element and a phase difference between a voltage applied to the divided electrode and a current and determines whether or not there is an abnormality of each divided electrode based on a measurement result.

Further, according to the present invention, an automatic chemical analyzer maintenance kit is connectable to an automatic chemical analyzer including a reaction vessel capable of accommodating at least a pipetted specimen and a reagent, and a stirring mechanism including a piezoelectric element that irradiates the reaction vessel with an ultrasonic wave, in which the piezoelectric element includes a plurality of divided electrodes. The automatic chemical analyzer maintenance kit measures, for each of divided electrodes, an absolute value of an impedance of the piezoelectric element and a phase difference between a voltage applied to the divided electrode and a current, and determines whether or not there is an abnormality of each divided electrode based on a measurement result.

Further, according to the present invention, there is provided an automatic chemical analyzer maintenance method for an automatic chemical analyzer including a reaction vessel capable of accommodating at least a pipetted specimen and a reagent, and a stirring mechanism including a piezoelectric element that irradiates the reaction vessel with an ultrasonic wave, in which the piezoelectric element includes a plurality of divided electrodes. The automatic chemical analyzer maintenance method includes connecting a maintenance kit to the automatic chemical analyzer via an interface unit, and, by the maintenance kit, measuring, for each of divided electrodes, an absolute value of an impedance of the piezoelectric element and a phase difference between a voltage applied to the divided electrode and a current, and determining whether or not there is an abnormality of each divided electrode based on a measurement result.

### Advantageous Effects of Invention

According to the present invention, it is possible to provide an automatic chemical analyzer, an automatic chemical analyzer maintenance kit, and an automatic chemical analyzer maintenance method capable of, even in a case where a problem of the automatic chemical analyzer occurs, clarifying a cause of the problem in a user site and coping with the problem without collecting a device or a component.

For example, in a case where some problems have occurred in an automatic analyzer that employs a stirring method in which an electrode on one side of a piezoelectric element that is a sound source that generates an ultrasonic wave is divided, and an irradiation position from the sound source is adjusted by selecting the electrode and supplying electric power, if the present invention is used, by measuring an impedance spectrum (referred to as an ImpS below) for each divided electrode, it is possible to determine a position of the divided electrode at which piezoelectricity is lost or damaged on the piezoelectric element, and to clarify causes of other problems in a power amplifier that supplies power, a relay circuit that selects an electrode, and the like without an abnormality in the piezoelectric element itself.

Objects, configurations, and advantageous effects other than those described above will be clarified by the descriptions of the following embodiments.

### Brief Description of Drawings

[FIG. 1] FIG. 1 is an overall schematic configuration diagram of an automatic chemical analyzer according to an embodiment of the present invention.
[FIG. 2] FIG. 2 is an explanatory view of an ultrasonic non-contact stirring mechanism that is a stirring mechanism illustrated in FIG. 1.
[FIG. 3] FIG. 3 is an external perspective view of a maintenance kit that measures an ImpS (impedance spectrum) of a piezoelectric element that is a sound source of ultrasonic non-contact stirring according to the embodiment of the present invention.
[FIG. 4] FIG. 4 is a configuration diagram of an electronic circuit of a maintenance kit body illustrated in FIG. 3.
[FIG. 5A] FIG. 5A is a diagram illustrating an example of an impedance profile of a normal piezoelectric element measured in water.
[FIG. 5B] FIG. 5B is a diagram illustrating an example of an impedance profile of an abnormal piezoelectric element measured in water.
[FIG. 6A] FIG. 6A is a diagram illustrating another example of the impedance profile of the normal piezoelectric element measured in the water.
[FIG. 6B] FIG. 6B is a diagram illustrating an example of an impedance profile of a normal piezoelectric element measured in air or in a state where a thermostatic bath is made in an empty state by discharging a constant temperature water.
[FIG. 7A] FIG. 7A is a diagram illustrating an example of a distribution of a population of resonance frequencies for each segment of the normal piezoelectric element.
[FIG. 7B] FIG. 7B is a diagram illustrating an example of a distribution of a population of minimum impedances for each segment of the normal piezoelectric element.
[FIG. 7C] FIG. 7C is a diagram illustrating an example of a distribution of resonance frequencies for each segment of the piezoelectric element measured by using the population illustrated in FIG. 7A as a normal population.
[FIG. 7D] FIG. 7D is a diagram illustrating an example of a distribution of minimum impedances for each segment of the piezoelectric element measured by using the population illustrated in FIG. 7B as the normal population.
[FIG. 8] FIG. 8 is a flowchart illustrating an automatic chemical analyzer maintenance method and is a diagram illustrating a processing flow of a maintenance kit according to the present embodiment.

### Description of Embodiments

Hereinafter, embodiments of the present invention will be described with reference to the drawings.

Note that components in an electronic device system used in the present embodiment are the most appropriately and easily procured at the time of filing of the present invention. In particular, there is a high possibility that more advanced electronic components will be distributed in the future. Among the components, in a case where the component can be substituted as an element necessary in the present invention, it is preferable to use the component.

### [Embodiment 1]

First, an automatic chemical analyzer and a stirring mechanism according to the present example will be described.

### [Configuration of Automatic Chemical Analyzer and Stirring Mechanism]

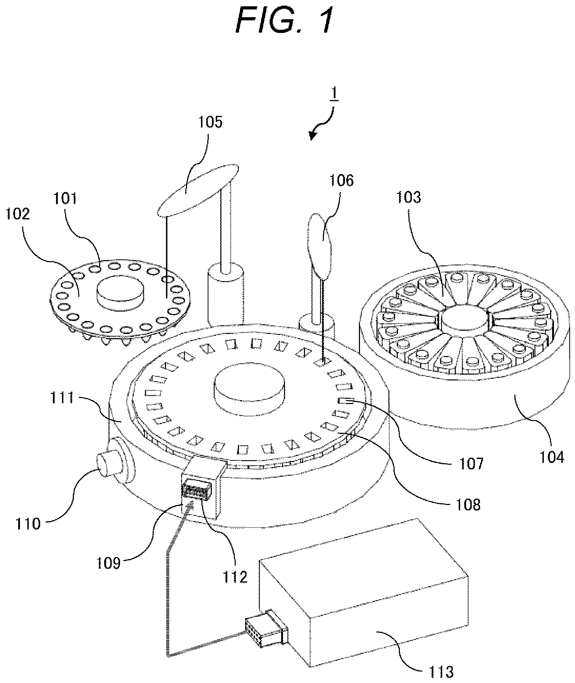

FIG. 1 is an overall schematic configuration diagram of an automatic chemical analyzer according to an embodiment of the present invention.

As illustrated in FIG. 1, an automatic chemical analyzer 1 includes a sample cup 101 into which each specimen is put, a sample disk 102 for installing a plurality of sample cups, a reagent cooling disk 104 for cooling a reagent bottle 103, a sample dispenser 105 for pipetting the specimen, a sample dispenser 105 for performing pipetting, and a reagent dispenser 106 for pipetting a reagent.

The specimen and the reagent are pipetted into a reaction vessel 107 by the sample dispenser 105 and the reagent dispenser 106, respectively. The reaction vessel 107 into which the specimen and the reagent have been pipetted is disposed along the circumferential direction on the reaction disc 108. In FIG. 1, the reaction vessel rotates clockwise and thus mixing is performed by a stirring mechanism 109 in a non-contact manner by using ultrasonic waves. The reaction between the specimen and the reagent which have been mixed is accelerated, and the absorbance characteristics thereof are measured by an absorbance meter 110. The reaction vessel 107 containing the specimen for which absorbance measurement, that is, an analysis has been ended is washed by a washing mechanism (not illustrated). After washing has been ended, the next specimen is pipetted, and the above-described series of analysis sequences is repeated. Note that the reaction vessel 107 disposed in the circumferential direction of the reaction disc 108 is in contact with constant temperature water (not illustrated) circulating in a thermostatic bath 111, and is maintained at a constant temperature through constant temperature water having a designated temperature. The sample disk 102, the reagent cooling disk 104, the pipetting mechanism (the sample dispenser 105 and the reagent dispenser 106), the reaction disc 108, and the like perform transmission and reception of signals by a host computer (not illustrated) mounted in the automatic chemical analyzer 1. Each operation sequence is controlled according to commands (signals) of the host computer. The stirring mechanism 109 is also connected to a relay circuit (not illustrated) for driving a piezoelectric element and a power amplifier system 113 via a connector 112, and the power amplifier system 113 also operates according to a command (signal) from the host computer. Note that the connector 112 is also referred to as an interface unit.

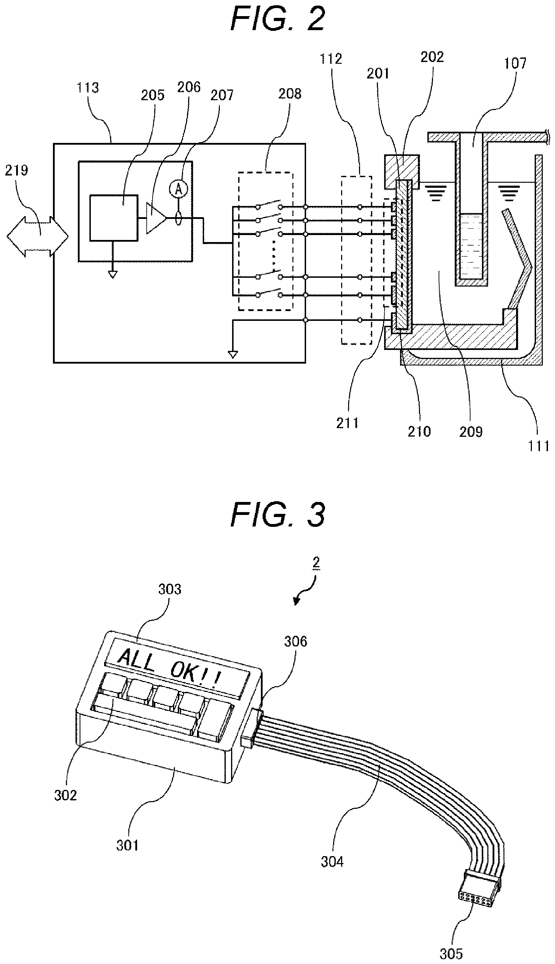

FIG. 2 is an explanatory view of an ultrasonic non-contact stirring mechanism that is the stirring mechanism illustrated in FIG. 1. In FIG. 2, the stirring mechanism 109 illustrated in FIG. 1 is illustrated as a cross-sectional view (on a surface stretched by two axes of a vertical direction and a reaction disc radial direction). A signal 219 from the host computer is also illustrated from the connector 112.

The stirring mechanism 109 includes a piezoelectric element 201, a jig 202 for mounting the piezoelectric element 201 on the thermostatic bath 111, and the power amplifier system 113 that supplies power to the piezoelectric element.

An electrode 210 on the constant temperature water 209 side of the piezoelectric element 201 is folded back to the opposite side along the lower end surface of the element as illustrated in FIG. 2. An electrode on the surface opposite to the constant temperature water 209 side is divided by predetermined length and width as illustrated in the diagram inside the broken line. Each divided electrode 211 is connected to each pin of the connector 112 on a one-to-one basis.

A function generation circuit 205 that generates a drive waveform, a final amplifier circuit 206 that amplifies the waveform to desired power, and a current monitor 207 that measures a current flowing through the piezoelectric element 201 at the time of voltage application by electromagnetic coupling disclosed in PTL 4 are incorporated in the power amplifier system 113. Note that, in the present embodiment, it is assumed that the current monitor 207 in the power amplifier system 113 monitors whether or not there is an abnormality in the function generation circuit 205 and the final amplifier circuit 206 as disclosed in PTL 4. In the present invention, a maintenance kit described later detects whether or not there is an abnormality on the piezoelectric element 201 side.

In the power amplifier system 113, a relay group 208 of which opening and closing are controlled by a command from the host computer is connected to each divided electrode 211 via the connector 112. An electrode at an appropriate position is selected from divided electrodes 211 by opening and closing the relay group 208 in accordance with the height of a liquid level of a stirring target liquid (liquid mixture of the specimen and the reagent) in the reaction vessel 107, and the irradiation position of the ultrasonic wave for the reaction vessel 107 is adjusted.

### [Configuration of Maintenance Kit]

FIG. 3 is an external perspective view of the maintenance kit that measures an ImpS (impedance spectrum) of the piezoelectric element that is a sound source of ultrasonic non-contact stirring according to the embodiment of the present invention. A maintenance kit 2 is provided for examining the state of the stirring mechanism 109. As described above, by measuring an ImpS of each divided electrode of the piezoelectric element 201 which is a sound source in a user site in which the automatic chemical analyzer 1 is installed, in addition to the normality/abnormality of the stirring mechanism 109, the cause of the abnormality is diagnosed at the time of abnormality.

As illustrated in FIG. 3, the maintenance kit body 301 (Impedance Measurement Module: referred to as an IMM below) includes an operation button 302 and a display device 303 for a measurement result or the like, and further includes a connector 305 via a signal line (cable) 304. The connector 305 can be connected to the connector 112 connected to the piezoelectric element 201 of the stirring mechanism 109 that performs ultrasonic non-contact stirring, which has been mounted on the automatic chemical analyzer 1. When maintenance is performed on the stirring mechanism 109 on the automatic chemical analyzer 1, the connector is connected to the connector 112 instead of the connector of the power amplifier system 113, and thus the ImpS of the piezoelectric element 201 that is the sound source can be measured. Note that the connector 305 of the maintenance kit 2 is also referred to as an interface unit. Further, in the present embodiment, a connection form between the interface part of the automatic chemical analyzer 1 and the interface part of the maintenance kit 2 is a wired connection via the connector, but the present invention is not limited thereto. For example, the interface units may be wirelessly connected.

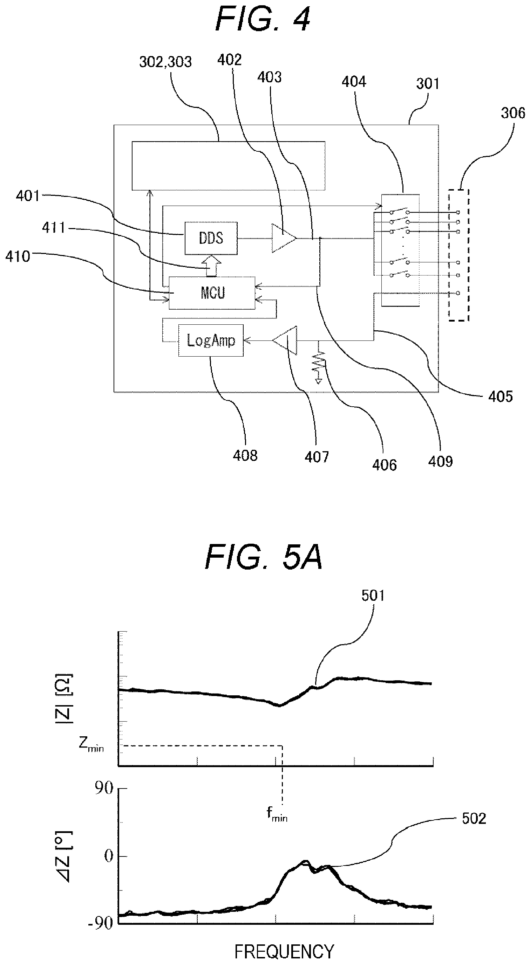

FIG. 4 is a configuration diagram of an electronic circuit of the maintenance kit body (IMM) illustrated in FIG. 3. As illustrated in FIG. 4, a sinusoidal voltage having a certain frequency is generated by a digital direct synthesizer (referred to as a DDS below) 401 in the electronic circuit of the IMM. The sinusoidal waveform voltage is output to an output terminal 403 by the waveform voltage passing through an amplifier 402. The sinusoidal voltage output to the output terminal 403 is output to a connector 306 via a relay group 404 or a multiplexer (referred to as an electrode switch below). The IMM 301 sequentially measures the ImpS for each electrode by short-circuiting the electrode switches one by one. When one electrode is short-circuited and the sinusoidal voltage is applied to the electrode, a current flowing through the electrode flows into a wiring 405 and is detected as a voltage value by a detection resistor 406. A voltage signal resulting from the current is further amplified by a log amplifier (LogAmp) 408 via an operational amplifier 407 that is linearly amplified with an appropriate gain. The voltage of the output terminal 403 applied to the electrode is input to a micro control unit (referred to as an MCU below) 410 via a wiring 409, and then is A/D converted in the MCU. The MCU 410 transmits a control signal 411 to the DDS 401 to sweep the frequency of a sine wave generated in a desired frequency range. The frequency, the voltage applied from the output terminal 403, and a measurement voltage caused by the current flowing through the element at this time are stored and calculated in a memory (not illustrated) in the MCU 410, and displayed on the display device 303 as an ImpS measurement result.

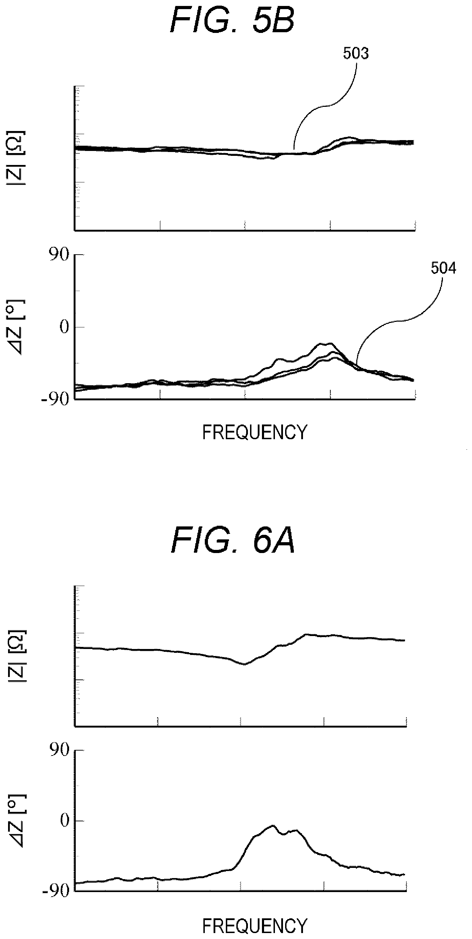

FIGS. 5A and 5B are examples of measurement results of the ImpS obtained by measurement (in a case where the thermostatic bath 111 is filled with the constant temperature water 209 in FIG. 2 at a predetermined water level and the liquid level in the reaction vessel 107 is sufficiently high) by the IMM 301 described with reference to FIGS. 3 and 4. FIG. 5A is a diagram illustrating an example of an impedance profile of a normal piezoelectric element 201 measured in water. FIG. 5A illustrates the ImpS of each of three electrodes of the normal piezoelectric element 201. In addition, FIG. 5B is a diagram illustrating an example of an impedance profile of an abnormal piezoelectric element 201 measured in water. FIG. 5B illustrates the ImpS of all electrodes of the abnormal piezoelectric element.

As illustrated in FIG. 5A, the ImpS of the normal piezoelectric element shows a uniform profile for an absolute value |Z| (an absolute value 501 of the impedance of the normal piezoelectric element measured in water) and a phase difference ΔZ (a phase 502 of the impedance of the normal piezoelectric element in water) for all electrodes. There is a frequency fmin at which the absolute value |Z| becomes the minimum value Zmin. However, as illustrated in FIG. 5B, in the abnormal piezoelectric element, the profile of the absolute value |Z| (the absolute value 503 of the impedance of the abnormal piezoelectric element in water) of any electrode and the phase difference ΔZ (the phase 504 of the impedance of the abnormal piezoelectric element in water) is not uniform, and the minimum value Zmin of the absolute value IZI is not found.

In the present embodiment, focusing on such a difference in ImpS between the normal piezoelectric element and the abnormal piezoelectric element, an algorithm for determining a normality/abnormality for each electrode part (for each electrode) is developed by a method as follows, and implemented in the IMM 301 illustrated in FIGS. 3 and 4.

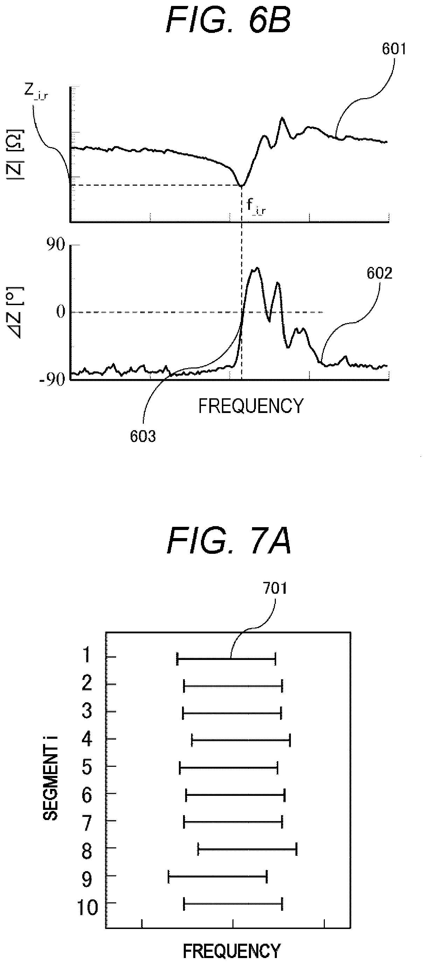

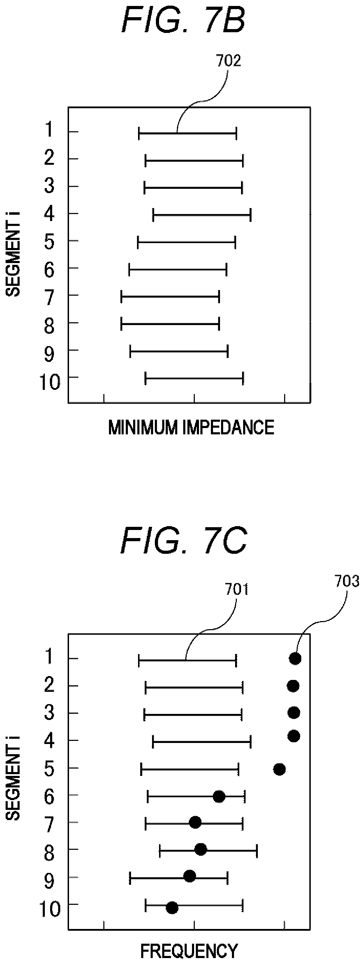

FIG. 6A is a diagram illustrating another example of the impedance profile of the normal piezoelectric element measured in the water. FIG. 6A illustrates a result of measuring the ImpS of a certain electrode of a normal piezoelectric element similar to FIG. 5A. This electrode number is set as the i-th electrode of the piezoelectric element, and the minimum value of the absolute value |Z| is referred to as Z_i_ min, and the frequency thereof is referred to as f_i_min. Therefore, for example, in a case where one-side electrode of one piezoelectric element is divided into 10, the minimum value of 10 sets of absolute values |Z| and the frequency thereof (Z_i_ min, f_i_min, i = 1, 2,..., 10) are obtained from the profile of the ImpS from one piezoelectric element. When the ImpS is measured for each electrode in a sufficient number (about several hundreds or more) of normal piezoelectric elements in advance, the average values of Z_i_ min and f_i_min (numbers of i = 1, 2,..., 10 have been assigned in order from the top electrode) may be particularly different for each place. Note that, in the present embodiment, the number of divided electrodes is set to 10, but the present invention is not limited thereto, and the number of divided electrodes may be appropriately set. When the average value ± 3σ (standard deviation) is plotted from the values of Z_i_ min and f_i_min for each electrode, which have been obtained from the sufficient number of normal piezoelectric elements, a distribution 701 of frequencies (normal range) and a distribution 702 of minimum impedances (normal range) for each electrode as illustrated in FIGS. 7A and 7B are obtained. In the present embodiment, this distribution is set as a population of the normal range, and the normality or abnormality of each electrode is determined based on whether or not the minimum value of the absolute value |Z| of each electrode of a determination target (piezoelectric element intended to be examined whether it is normal or abnormal) and the frequency thereof are within the normal ranges.

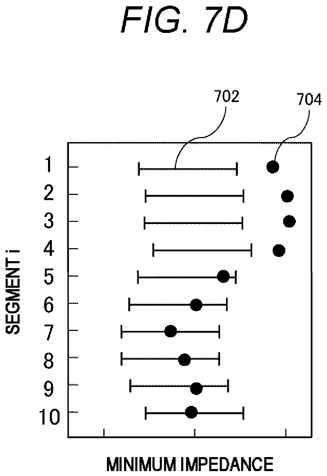

FIG. 7C is a diagram illustrating an example of a distribution of resonance frequencies for each segment of the piezoelectric element measured by using the population illustrated in FIG. 7A as a normal population. FIG. 7D is a diagram illustrating an example of a distribution of minimum impedances for each segment of the piezoelectric element measured by using the population illustrated in FIG. 7B as the normal population. Dots 703 and 704 plotted on the normal ranges 701 and 702 of the frequency and the minimum impedance for each electrode are the frequency and the minimum impedance detected from the ImpS of the piezoelectric element as a determination target. In this example, it is described that both the frequency and the minimum impedance for the first to fourth segments (divided electrodes) exceed the normal ranges, and the upper portion of the piezoelectric element as the determination target has some abnormal characteristics.

FIG. 6B is a diagram illustrating an example of an impedance profile of the normal piezoelectric element measured in air or in a state where the thermostatic bath is made in an empty state by discharging the constant temperature water. That is, FIG. 6B illustrates an example of the ImpS of the normal piezoelectric element, which has been measured in air in a state in which the thermostatic bath 111 is made empty by discharging the constant temperature water 209 in FIG. 2 or in a state in which the piezoelectric element is removed from the automatic chemical analyzer 1 for each stirring mechanism 109. Unlike the ImpS in FIG. 6A measured in water, an acoustic load by water is low, so that the minimum value of the ImpS indicates a lower value. The minimum value of the ImpS measured in the air is acoustically a resonance point of the piezoelectric element, and the frequency thereof may be referred to as a resonance frequency of the piezoelectric element alone. Therefore, the minimum value of the ImpS and the frequency thereof, which have been measured in water and have been described so far are distinguished and described as Z_i_r and f_i_r (the suffix i is set to be the number of the divided electrode similarly to the underwater measurement). Since the range of the normal population of Z_i_r and f_i_r measured in air is different from Z_i_ min and f_i_min measured in water even for the same piezoelectric element, it is necessary to separately define Z_i_r and f_i_r by using a sufficient number of other normal piezoelectric elements.

In addition, even in the same piezoelectric element, a significant characteristic also appears in the phase difference ΔZ at the time of measurement in air unlike measurement in water. In the phase difference at the time of resonance measured in air, the electrical characteristics transition from capacitive to inductive in the normal piezoelectric element, so that the phase difference becomes zero as indicated by 603. Whether or not there is such a zero transition in the phase difference of the ImpS measured in air can also be used to determine the normality of the piezoelectric element.

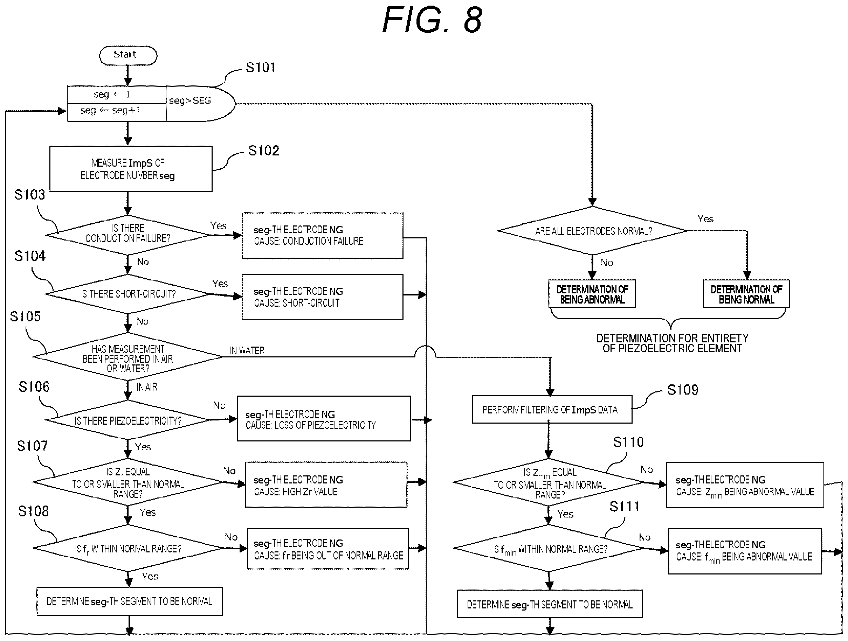

In general, in a case where the ImpS is measured in air in this manner, the characteristics of the piezoelectric element 201 can be accurately measured with higher sensitivity than in water. However, in this case, as described above, it takes time and effort to discharge the constant temperature water 209 from the thermostatic bath 111 or to disassemble and remove a part of the stirring mechanism 109 that performs ultrasonic non-contact stirring. Therefore, as a maintenance method using the IMM 301, a determination algorithm of a flow illustrated in FIG. 8 is implemented in the IMM 301.

FIG. 8 is a flowchart illustrating an automatic chemical analyzer maintenance method and is a diagram illustrating a processing flow of the maintenance kit according to the present embodiment. In the processing flow illustrated in FIG. 8, in order to sequentially measure each electrode and to determine the normality/abnormality, a loop process is executed with an electrode number as a counter.

As illustrated in FIG. 8, first, after start, in Step S101, the MCU 410 constituting the IMM 301 executes a loop process of an electrode number (denoted as seg in FIG. 8). Then, in Step S102, the MCU 410 measures the ImpS of the seg-th electrode.

In Step S103, from the measured absolute value |Z| of the ImpS, for example, in a case where the value is a large value in the order of megaQ, it is determined that conduction failure has occurred in a measurement target, and the electrode is determined as NG as the conduction failure. On the other hand, in a case where there is no conduction failure, the process proceeds to Step S104.

In Step S104, in a case where the absolute value |Z| is as close as possible to 0, the MCU 410 determines that a short circuit has occurred due to a connection failure, a water leak, or the like, and determines the electrode as NG. Through the processes of Steps S103 and S104, the subsequent processing flow branches in Step S105 based on the measurement conditions in air and water, which have been set in advance by a measurer (operator) before the start of the processing flow.

First, in a case where the measurement is performed in air, the phase difference is zero at the resonance frequency in the normal piezoelectric element (the electrical characteristics change from capacitive to inductive) as described above. Thus, first, it is determined in Step S106 whether or not the phase difference is zero at the time of the resonance frequency in the electrode. If the phase difference is not zero in this process, the piezoelectricity is lost, and thus the electrode is determined as NG.

Subsequently, in Step S107, it is determined whether or not the impedance Zr at the time of the resonance frequency is within the normal range 702 illustrated in FIG. 7B. In a case where the impedance is not within the normal range 702, the electrode is determined as NG. On the other hand, in a case where the impedance is within the normal range 702, the process proceeds to Step S108, and it is determined whether or not the resonance frequency fr at the time of the resonance frequency is within the normal range 701 illustrated in FIG. 7A. In a case where the resonance frequency is not within the normal range 701, the electrode is determined as NG. On the other hand, in a case where the resonance frequency is within the normal range 701, the seg-th segment (divided electrode) is determined to be normal. The process returns to Step S101, the electrode number is incremented by 1, and the above-described process is repeated.

Then, the absolute value of the ImpS and the phase profile in the case of being measured in water are lower in sensitivity than those in air as illustrated in FIG. 6A. In addition, the measurement is performed in water, and thus the measurement may be affected by an acoustic load of water, a reflected wave, or the like from the surroundings. Z_min and f_min are detected after profile filtering (smoothing processing) is performed in Step S109. In Steps S110 and Sill, it is determined whether or not Z_min and f_min are within normal ranges similarly to the measurement in the air, and thus the normality or abnormality is determined. In a case where the determination result in Step S111 is normal, the process returns to Step S101, the electrode number is incremented by 1, and the above-described process is repeated.

In a case where all the divided electrodes are normal by the loop process in Step S101, it is determined that the piezoelectric element 201 is normal. On the other hand, in a case where all the divided electrodes are not normal, that is, in a case where some of the divided electrodes are abnormal, the piezoelectric element 201 is determined to be abnormal.

By executing the flow of the determination processing as described above for each electrode (for each divided electrode), it is possible to determine the normality/abnormality for each electrode (for each divided electrode), and, in a case where the electrode is determined to be abnormal, it is possible to estimate the cause of the abnormality.

According to the present embodiment as described above, it is possible to provide an automatic chemical analyzer, an automatic chemical analyzer maintenance kit, and an automatic chemical analyzer maintenance method capable of, even in a case where a problem of the automatic chemical analyzer occurs, clarifying a cause of the problem in a user site and coping with the problem without collecting a device or a component.

Further, in a case where some problems have occurred in an automatic analyzer that employs a stirring method in which an electrode on one side of a piezoelectric element that is a sound source that generates an ultrasonic wave is divided, and an irradiation position from the sound source is adjusted by selecting the electrode and supplying electric power, if the present embodiment is used, by measuring an ImpS for each divided electrode, it is possible to determine a position of the divided electrode at which piezoelectricity is lost or damaged on the piezoelectric element, and to clarify causes of other problems in a power amplifier that supplies power, a relay circuit that selects an electrode, and the like without an abnormality in the piezoelectric element itself.

The present invention is not limited to the above embodiment, and various modification examples may be provided.

For example, the above embodiment is described in detail in order to explain the present invention in an easy-to-understand manner, and the above embodiment is not necessarily limited to a case including all the described configurations.

### Reference Signs List

- 1: automatic chemical analyzer
- 2: maintenance Kit
- 101: sample cup
- 102: sample disk
- 103: reagent bottle
- 104: reagent cooling disk
- 105: sample dispenser
- 106: reagent dispenser
- 107: reaction vessel
- 108: reaction disc
- 109: stirring mechanism
- 110: absorbance meter
- 111: thermostatic bath
- 112: connector
- 113: power amplifier system
- 201: piezoelectric element
- 202: jig
- 205: function generation circuit
- 206: final amplifier circuit
- 207: current monitor
- 208: relay group
- 209: constant temperature water
- 210: electrode
- 211: divided electrode
- 219: signal from host computer
- 301: maintenance kit body
- 302: operation button
- 303: display device
- 304: signal line (cable)
- 305: connector
- 306: connector
- 401: digital direct synthesizer
- 402: amplifier
- 403: output terminal
- 404: relay group
- 405: wiring
- 406: detection resistor
- 407: operational amplifier
- 408: log amplifier (LogAmp)
- 409: wiring
- 410: micro control unit (MCU)
- 411: control signal

## Claims

1. An automatic chemical analyzer comprising: a reaction vessel capable of accommodating at least a pipetted specimen and a reagent; and a stirring mechanism including a piezoelectric element that irradiates the reaction vessel with an ultrasonic wave, the piezoelectric element including a plurality of divided electrodes, wherein
the automatic chemical analyzer further comprises an interface unit connectable to a maintenance kit that measures, for each of divided electrodes, an absolute value of an impedance of the piezoelectric element and a phase difference between a voltage applied to the divided electrode and a current and determines whether or not there is an abnormality of each divided electrode based on a measurement result.

2. The automatic chemical analyzer according to claim 1, wherein
the maintenance kit detects a frequency at which the absolute value of the impedance of the piezoelectric element is minimized and the absolute value of the impedance, for each of the divided electrodes, and determines whether or not there is the abnormality of each divided electrode.

3. The automatic chemical analyzer according to claim 2, wherein
the maintenance kit determines whether or not there is the abnormality of each divided electrode by using the frequency at which the absolute value of the impedance of the piezoelectric element is minimized and a normal range of the absolute value of the impedance, for each of the divided electrodes set in advance.

4. The automatic chemical analyzer according to claim 3, wherein
the maintenance kit measures impedance spectra of a large number of normal piezoelectric elements for each of divided electrodes in advance, and sets the frequency at which the absolute value of the impedance of the piezoelectric element is minimized and the normal range of the absolute value of the impedance, for each of the divided electrodes, based on the measured impedance spectra.

5. The automatic chemical analyzer according to claim 4, wherein
the maintenance kit measures the impedance spectrum of the normal piezoelectric element for each of divided electrodes under conditions in water and air, and removes an influence of a reflected wave received in a thermostatic bath by performing a smoothing process on the impedance spectrum measured in water.

6. An automatic chemical analyzer maintenance kit connectable to an automatic chemical analyzer, the automatic chemical analyzer including a reaction vessel capable of accommodating at least a pipetted specimen and a reagent, and a stirring mechanism including a piezoelectric element that irradiates the reaction vessel with an ultrasonic wave, the piezoelectric element including a plurality of divided electrodes, wherein
the automatic chemical analyzer maintenance kit measures, for each of divided electrodes, an absolute value of an impedance of the piezoelectric element and a phase difference between a voltage applied to the divided electrode and a current, and determines whether or not there is an abnormality of each divided electrode based on a measurement result.

7. The automatic chemical analyzer maintenance kit according to claim 6, wherein
the maintenance kit detects a frequency at which the absolute value of the impedance of the piezoelectric element is minimized and the absolute value of the impedance, for each of the divided electrodes, and determines whether or not there is the abnormality of each divided electrode.

8. The automatic chemical analyzer maintenance kit according to claim 7, wherein
the maintenance kit determines whether or not there is the abnormality of each divided electrode by using the frequency at which the absolute value of the impedance of the piezoelectric element is minimized and a normal range of the absolute value of the impedance, for each of the divided electrodes set in advance.

9. The automatic chemical analyzer maintenance kit according to claim 8, wherein
the maintenance kit measures impedance spectra of a large number of normal piezoelectric elements for each of divided electrodes in advance, and sets the frequency at which the absolute value of the impedance of the piezoelectric element is minimized and the normal range of the absolute value of the impedance, for each of the divided electrodes, based on the measured impedance spectra.

10. The automatic chemical analyzer maintenance kit according to claim 9, wherein
the maintenance kit measures the impedance spectrum of the normal piezoelectric element for each of divided electrodes under conditions in water and air, and removes an influence of a reflected wave received in a thermostatic bath by performing a smoothing process on the impedance spectrum measured in water.

11. An automatic chemical analyzer maintenance method for an automatic chemical analyzer including a reaction vessel capable of accommodating at least a pipetted specimen and a reagent, and a stirring mechanism including a piezoelectric element that irradiates the reaction vessel with an ultrasonic wave, the piezoelectric element including a plurality of divided electrodes, the automatic chemical analyzer maintenance method comprising:
connecting a maintenance kit to the automatic chemical analyzer via an interface unit; and
by the maintenance kit, measuring, for each of divided electrodes, an absolute value of impedance of the piezoelectric element and a phase difference between a voltage applied to the divided electrode and a current, and determining whether or not there is an abnormality of each divided electrode based on a measurement result.

12. The automatic chemical analyzer maintenance method according to claim 11, wherein
the maintenance kit detects a frequency at which the absolute value of the impedance of the piezoelectric element is minimized and the absolute value of the impedance, for each of the divided electrodes, and determines whether or not there is the abnormality of each divided electrode.

13. The automatic chemical analyzer maintenance method according to claim 12, wherein
the maintenance kit determines whether or not there is the abnormality of each divided electrode by using the frequency at which the absolute value of the impedance of the piezoelectric element is minimized and a normal range of the absolute value of the impedance, for each of the divided electrodes set in advance.

14. The automatic chemical analyzer maintenance method according to claim 13, wherein
the maintenance kit measures impedance spectra of a large number of normal piezoelectric elements for each of divided electrodes in advance, and sets the frequency at which the absolute value of the impedance of the piezoelectric element is minimized and the normal range of the absolute value of the impedance, for each of the divided electrodes, based on the measured impedance spectra.

15. The automatic chemical analyzer maintenance method according to claim 14, wherein
the maintenance kit measures the impedance spectrum of the normal piezoelectric element for each of divided electrodes under conditions in water and air, and removes an influence of a reflected wave received in a thermostatic bath by performing a smoothing process on the impedance spectrum measured in water.
